**Europäisches Patentamt**

**European Patent Office**

**Office européen des brevets**

(19)

(11) Publication number: **0 171 936**
**A2**

(12) # EUROPEAN PATENT APPLICATION

(21) Application number: **85305110.0**

(22) Date of filing: **18.07.85**

(51) Int. Cl.⁴: **G 01 V 1/20**

(30) Priority: **03.08.84 GB 8419907**

(43) Date of publication of application:
**19.02.86 Bulletin 86/8**

(84) Designated Contracting States:
**AT BE CH DE FR IT LI LU NL SE**

(71) Applicant: **STANDARD TELEPHONES AND CABLES PUBLIC LIMITED COMPANY**
**190 Strand**
**London, WC2R 1DU(GB)**

(71) Applicant: **BRITOIL PLC**
**150 St. Vincent Street**
**Glasgow, G2 5LJ(GB)**

(72) Inventor: **Cameron, Neil Wilson**
**1 Carston Close**
**Lee London, SE12 8DY(GB)**

(72) Inventor: **Parsons, Allan Thomas**
**12 Carlton Road North**
**Weymouth Dorset(GB)**

(74) Representative: **Capsey, Sydney Ross**
**Standard Telephones and Cables Patent Department**
**Edinburgh Way**
**Harlow Essex CM20 2SH(GB)**

(54) Vibration isolation section for a seismic streamer.

(57) A vibration isolator section for a seismic streamer having a flexible tube 1 of plastics material containing nylon rope strainwire(s) 4 attached to discretely spaced bulkheads 2 substantially filling the tube cross section, with open spacer elements 3 between the bulkheads supporting the tube wall and electrical cables 5, the remaining internal volume of the section being filled with an electrically inert liquid, the placement of the bulkheads being such as to optimise the attenuation of vibrational energy at peak input frequencies.

Croydon Printing Company Ltd.

# VIBRATION ISOLATION SECTION FOR A SEISMIC STREAMER

This invention relates to vibration isolation sections for a seismic streamer.

A seismic streamer comprises an array of hydrophones and electronic circuits, contained within a flexible hose, towed behind a ship. The array may be hundreds of metres in length. The array is towed by means of a cable deployed from the ship and, to provide stability during towing, it is customary to attach a long tail rope to the rear of the array.

A major problem with towed arrays is noise which degrades the performance of the streamer. Different types of noise arise from different sources. There are two main forcing functions which transfer into major noise carrying modes. These are

1)      Axial vibration, of which there are two components, namely a) head and tail input, and b) residual input;

2)      Turbulent boundary layer (T.B.L.).

Both of these forcing functions excite the two major noise carrying modes, which are a) breathing waves (hose diameter variation) and b) hose extension waves. Only the turbulent boundary layer has a convective mode of noise transfer.

Typical prior art streamer sections comprise groups of 12 hydrophones spaced at 1-1.5 metres, the overall group length being 12-18 metres. These spacings tend to attenuate fast moving noise, i.e. sound waves in water.

Some of the noise within the streamer can be attenuated by careful acoustic design of the streamer hydrophone sections. Such design includes the use of substantially non-elastic low extension strainwires to which the hydrophone mounts are secured. The axial vibration, however, is best attenuated by interposing vibration isolation sections between the array and the towing cable at the front, and between the array and the tail rope at the rear.

According to the present invention there is provided a vibration isolator section for a seismic streamer comprising a flexible tube or hose having a number of discretely spaced bulkheads each substantially filling the internal cross section of the tube, characterised in that there is provided at least one strainwire fabricated from a material having a low vibration mechanical impedance to which the bulkheads and a plurality of intermediate spacer elements are secured.

In a preferred embodiment of the invention the vibration isolator section is provided with three nylon rope strainwires equally spaced around the periphery of the bulkheads and spacer elements.

Preferably the spacer elements are of an acoustically open design.

An embodiment of the invention will now be described with reference to the accompanying drawings, wherein:-

Fig. 1 illustrates the construction of a vibration isolator section, and

Fig. 2 illustrates a bulkhead.

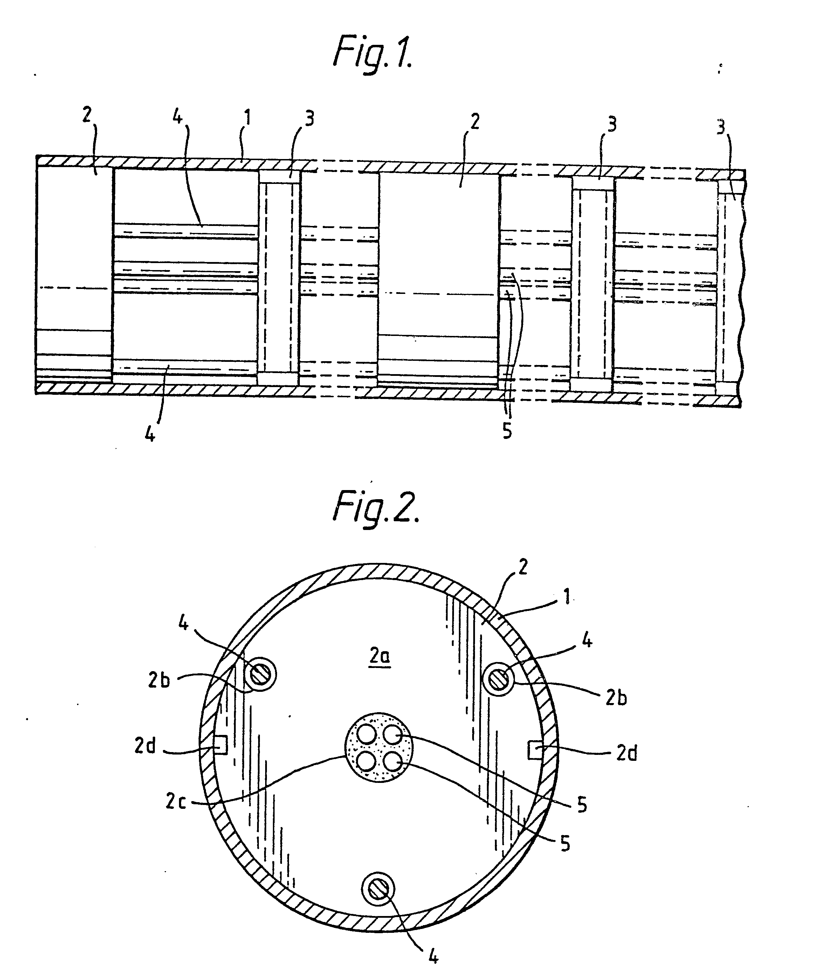

The vibration isolator section shown in Fig. 1 comprises an outer flexible tube or hose 1, e.g. of plastics material, with a number of bulkheads 2 at discrete intervals, together with mechanical spacers 3 intermediate the bulkheads. Running the length of the section are three nylon rope strainwires 4 which are anchored in the two end bulkheads and to which are attached the other bulkheads and spacers.

A typical bulkhead is shown in Fig. 2, and comprises a substantially circular solid body 2a with apertures 2b in which the strainwires are secured. A preferred method of anchoring the strainwires is by pins moulded into the bulkhead to transfix the strainwire as it passes through the aperture. This enables the bulkhead to follow the strain member vibration. A central aperture 2c is provided to carry loosely laid electrical cables 5. The strainwire and cable apertures are subsequently filled and sealed when the strainwires and cables are in place. The bulkhead has two small notches 2d in its outer edge whereby when the mechanical assembly of the section is completed the interior of the section can be filled with an electrically inert viscous liquid to adjust the buoyancy of the section. The size of the filling notches 2d are such as not to be detrimental to the vibration dissipation efficiency of the bulkhead. The spacers 3 are typically an open annulus defining a large central aperture and provided with strainwire anchorages at the periphery. The electrical cables are carried through the large central aperture. The electrical cables are provided with sufficient slack in them to avoid them being strained when the nylon rope strainwires are stretched under load. The spacers are designed to have a low acoustic impedance, in contrast to the bulkheads which have a high acoustic impedance. A suitable mechanical spacer is disclosed in our co-pending British patent application No. 8313796 (M.J. Bryant 3-2-1-1).

The use of high acoustic impedance bulkheads at discrete intervals dissipate axial vibration energy in noise modes which are easier to damp. The placement of the bulkheads is determined by the optimum distances required to attenuate the vibrational energy at the peak input frequency. The use of low acoustic impedance spacers allows the attenuation effect of the bulkheads to be optimised. The use of nylon rope strainwires, which have a certain amount of elasticity, allows longitudinal shock forces to be absorbed and converted at the bulkheads to prevent these shock forces reaching the hydrophone sections. Generally the vibration isolator section should have a lower vibrational impedance than the hydrophone containing sections, to facilitate vibration being reflected back into the isolator sections.

In an alternative construction to that shown in the drawings the section has a single central strainwire and the electrical cables are secured at the periphery of the bulkheads. Such a design requires different shaped spacer elements, e.g. asteroid elements the centres of which are secured to the single strainwire.

CLAIMS:-

1. A vibration isolator section for a seismic streamer comprising a flexible tube or hose having a number of discretely spaced bulkheads each substantially filling the internal cross section of the tube, characterised in that there is provided at least one strainwire fabricated from a material having a low vibration mechanical impedance to which the bulkheads and a plurality of intermediate spacer elements are secured.

2. A vibration isolator section according to claim 1 having three nylon rope strainwires equally spaced around the periphery of the bulkheads and spacer elements.

3. A vibration isolator section according to claim 1 or 2 characterised in that the bulkheads have a central aperture through which are passed electrical cables, said aperture being subsequently sealed.

4. A vibration isolator section according to claim 1 or 2 having a single central strainwire to which the bulkheads and spacer elements are secured, with a plurality of electrical cables disposed secured at the periphery of the bulkheads and spacer elements.

5. A vibration isolator section for a seismic streamer having a flexible tube of plastics material characterised in that nylon rope strainwire(s) are attached to discretely spaced bulkheads each substantially filling the tube cross section, with one or more open spacer elements between the bulkheads supporting the tube wall and electrical cables threaded along the tube, the remaining internal volume of the section being filled with an electrically inert liquid, the placement of the bulkheads being such as to optimise the attenuation of vibrational energy at peak input frequencies.

0171936

## Fig.1.

## Fig.2.